# FASCICULE DE BREVET EUROPEEN

(11) **EP 1 523 441 B1**
(45) Date de publication et mention de la délivrance du brevet: **06.07.2016**
(21) Numéro de dépôt: 03755602.4
(22) Date de dépôt: 15.07.2003
(51) Int. Cl.: B64D 11/00

(54) **MODULE DE CABINE D'AERONEF POUR PASSAGERS**
FLUGZEUGKABINENMODUL FÜR PASSAGIERE
AIRCRAFT CABIN MODULE FOR PASSENGERS

(30) Priorité: 19.07.2002 FR 0209180
(43) Date de publication de la demande: 20.04.2005
(73) Titulaire: Airbus, 31707 Blagnac (FR)
(72) Inventeur: SAINT-JALMES, Bruno, F- 31400 Toulouse (FR)
(74) Mandataire: Santarelli
(86) Numéro de dépôt international: PCT/FR2003/002228
(87) Numéro de publication internationale: WO 2004/009442

(56) Documents cités:
- EP-A- 0 035 955
- EP-A- 0 850 834
- DE-A- 1 811 637
- FR-A- 917 909
- FR-A- 1 002 271
- FR-A- 2 426 608
- US-A- 2 462 027
- US-A- 5 024 398
- US-B1- 6 398 164

## Description

La présente invention concerne un module de cabine pour aéronef.

Les aéronefs actuels proposent différentes classes de confort pour leurs passagers. On trouve alors des sièges plus ou moins confortables (dossiers inclinables, sièges avec soutien prévu pour les jambes, sièges convertibles en lit etc...). L'espace alloué à chaque passager est lui aussi plus ou moins important selon la classe.

Les voyageurs peuvent donc bénéficier d'un confort de couchage important mais ne disposent pas, comme c'est le cas par exemple dans un train couchette, d'un espace clos intime, comme dans le document US 2462027.

Ceci s'explique par les contraintes de sécurité que l'on trouve à bord d'un aéronef. Parmi ces contraintes, on relèvera les suivantes. Les passagers doivent décoller et atterrir en position assise, dans le sens de déplacement de l'avion ou dans le sens opposé. En outre, lors de ces phases de décollage et d'atterrissage, le personnel de bord, lui aussi installé assis sur un siège orienté longitudinalement par rapport au déplacement de l'avion, doit pouvoir surveiller la majorité des passagers, pour surveiller notamment que tout se passe bien et que, par exemple, aucun passager ne se lève durant ces phases de décollage et d'atterrissage.

Il a donc été jusqu'à présent considéré que la réalisation de compartiments individuels pour un ou pour plusieurs passagers n'était pas adaptée à un aéronef.

La présente invention a pour but de fournir toutefois un module de cabine pour aéronef permettant de recréer un espace comparable à un compartiment tel qu'il en existe dans des trains couchettes. Bien entendu, un tel module devra répondre aux normes de sécurité établies pour l'aviation civile.

À cet effet, elle propose un module de cabine d'aéronef comportant :
- deux parois transversales s'étendant depuis une paroi de cabine longitudinale jusqu'à un couloir longitudinal,
- une paroi longitudinale séparant le module de cabine du couloir,
- au moins un module de service disposé entre les deux parois transversales, sensiblement symétriquement par rapport à un plan transversal médian, en définissant avec les parois du module deux espaces de vie contigus,
- un accès du couloir à chaque espace de vie,
- au moins un siège dans chaque espace de vie, chaque siège ayant au moins une configuration dans laquelle il est orienté parallèlement à la paroi de cabine,
chaque espace de vie comportant des éléments pouvant former une surface de couchage pour au moins un passager.

Un tel module est compatible avec les contraintes existant dans un aéronef, tant en matière d'encombrement que de sécurité.

Pour que les passagers puissent prendre place dans le module de cabine lors des phases de décollage et d'atterrissage tout en étant visibles du personnel navigant commercial, on prévoit que l'une au moins des parois transversales comporte une portion transparente.

Avantageusement le module de service est disposé le long du couloir en étant séparé de chaque paroi transversale par un accès du couloir au module.

Dans une première forme de réalisation d'un module selon l'invention, un siège de chaque espace de vie est d'un type transformable et forme lesdits éléments pouvant former la surface de couchage. Dans ce cas, le siège est avantageusement monté pivotant autour d'un axe vertical de telle manière que la surface de couchage puisse être orientée transversalement.

Dans une autre forme de réalisation, les éléments pouvant former une surface de couchage comportent par exemple un panneau monté pivotant entre une position sensiblement verticale relevée contre le module de service et une position rabattue sensiblement horizontale. Dans cette autre forme de réalisation, les éléments pouvant former une surface de couchage comportent par exemple en outre une surface d'appui sensiblement horizontale disposée le long de la paroi de cabine et coopérant avec le panneau pivotant lorsque celui-ci est en position rabattue pour former la surface de couchage. On peut prévoir que cette surface d'appui forme un siège muni éventuellement d'un dossier.

Dans une variante de réalisation, un second siège est prévu dans chaque espace de vie. Ce second siège peut être un strapontin, ou autre, et est de préférence orienté perpendiculairement à la paroi de cabine contre celle-ci. Dans ce dernier cas, un siège d'angle peut être disposé entre les deux sièges pour les relier et former ainsi une banquette d'angle.

Une forme de réalisation préférentielle prévoit qu'une cloison mobile ou amovible est disponible pour séparer à volonté les deux espaces de vie en s'étendant entre la paroi de cabine et la paroi longitudinale opposée. Cette cloison est avantageusement formée de plusieurs tronçons télescopiques extensibles transversalement, ceux-ci se repliant de préférence vers le module de service lorsque le module de service est centré par rapport aux parois transversales et disposé le long d'une paroi longitudinale. Un logement est alors avantageusement prévu dans le module de service pour recevoir les tronçons télescopiques en position repliée. Ce logement est par exemple réalisé dans une paroi de séparation transversale du module de service. De même que les parois transversales du module, la cloison mobile peut elle aussi comporter une portion transparente.

Les portions transparentes réalisées dans les parois transversales et dans une éventuelle cloison mobile sont de préférence occultables. Ainsi, durant les phases de décollage et d'atterrissage, les portions transparentes restent transparentes et durant le vol de croisière, ces portions sont occultées. Une forme de réalisation préférentielle prévoit qu'au moins une portion transparente comporte une couche de cristaux liquides associée à des moyens pour soumettre cette couche de cristaux liquides à une différence de potentiel électrique, cette couche étant opaque ou translucide selon que la différence de potentiel appliquée. On peut également prévoir qu'au moins une portion transparente est équipée d'un store ou similaire.

Le module de service est par exemple un équipement sanitaire présentant au moins un point d'eau. L'équipement sanitaire peut être muni d'un lavabo central et/ou une douche. Il comporte aussi par exemple deux portes d'accès, chaque espace de vie comportant une porte d'accès à l'équipement sanitaire. Dans ce dernier cas, l'équipement sanitaire comprend avantageusement un lavabo pour chaque espace de vie. Chaque lavabo est alors par exemple mobile entre une position escamotée à l'intérieur de l'équipement sanitaire et une position sortie à l'extérieur de l'équipement sanitaire. Dans ce cas, l'ouverture de la porte d'accès à l'équipement sanitaire commande avantageusement le passage du lavabo de sa position escamotée vers sa position sortie.

Le module de service peut également être un espace de rangement, ou bien un module d'assistance médicale, ou bien un meuble office équipé pour la restauration des passagers, ou ... etc. Ce module peut être destiné à l'usage des passagers voyageant dans le module de cabine, ou du personnel navigant commercial, ou encore de tierces personnes (médecins, ...).

Les parois transversales, le module de service et le siège au nombre d'au moins un sont munis de préférence chacun de moyens de fixation pour leur fixation sur des rails de fixation longitudinaux disposés dans le sol de la cabine. De tels rails sont quasiment toujours prévus dans des avions destinés au transport de passagers pour permettre la fixation de sièges. Les moyens de fixation utilisés pour les éléments constitutifs d'un module selon l'invention seront par exemple les mêmes que ceux utilisés habituellement pour la fixation de sièges, avec une éventuelle adaptation.

À titre d'exemple, un module selon l'invention présente une longueur dans la direction longitudinale comprise entre 2,0 m et 4,0 m et une largeur au sol, dans la direction transversale, comprise entre 2,3 m et 3,5 m.

La présente invention concerne également un ensemble de modules tels que décrits ci-dessus, alignés les uns à côté des autres le long d'un couloir longitudinal, caractérisé en ce que chaque paroi transversale de module, sauf éventuellement une paroi transversale se trouvant à une extrémité de l'ensemble de modules, comporte une portion transparente et en ce que les portions transparentes sont alignées.

Dans un tel ensemble, ledit siège de chaque module de l'ensemble ayant une configuration dans laquelle il est orienté parallèlement au couloir se trouve de préférence sensiblement dans l'alignement des portions transparentes.

La présente invention concerne aussi un tronçon de cabine d'aéronef, caractérisé en ce qu'il comporte au moins un module tel que décrit plus haut. Ce tronçon de cabine d'aéronef comporte par exemple un couloir central de part et d'autre duquel se trouve au moins un module.

Enfin, cette invention concerne un aéronef, caractérisé en ce qu'il comporte au moins un module selon l'invention.

Des détails et avantages de l'invention ressortiront mieux de la description qui suit, faite en référence au dessin schématique annexé, sur lequel :
La figure 1 montre en vue de dessus un ensemble de six modules de cabine selon l'invention,
La figure 2 montre en perspective une forme de réalisation d'un module de cabine selon l'invention,
La figure 3 montre en perspective une autre forme de réalisation d'un module de cabine selon l'invention, et
La figure 4 montre schématiquement en coupe un tronçon de cabine d'avion équipé de modules de cabine selon l'invention.

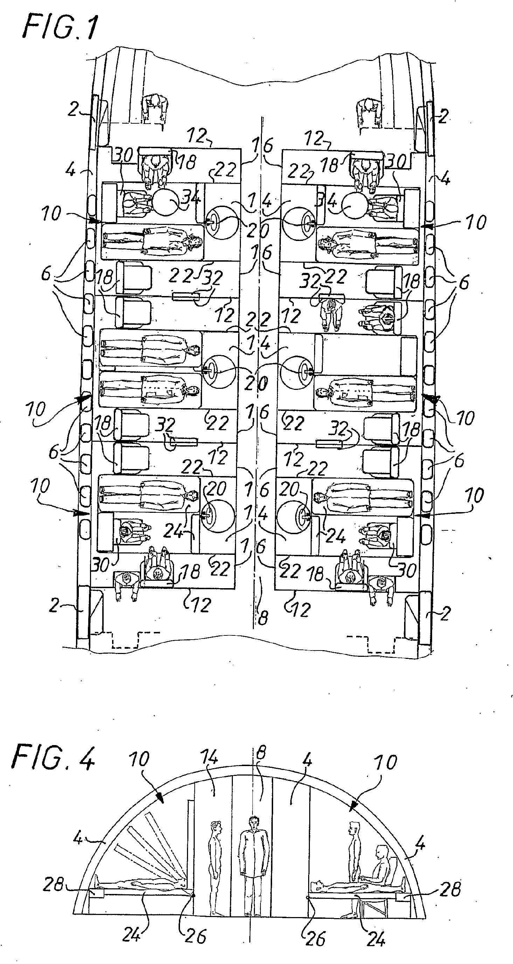

La figure 1 représente schématiquement l'espace habitable d'un tronçon d'une cabine d'avion. Ce tronçon est situé entre deux issues de secours 2 successives longitudinalement. Une paroi de cabine 4 longitudinale délimite cet espace sur les deux côtés de l'avion. Des hublots 6 sont réalisés dans chaque paroi de cabine 4. Un couloir 8 s'étend longitudinalement au centre du tronçon de cabine. De part et d'autre de ce couloir 8 se trouvent à chaque fois trois modules 10 destinés à recevoir chacun deux passagers. Le couloir 8 est séparé de chaque module 10 par une paroi longitudinale.

La longueur du couloir 8 est par exemple d'environ 9 m et sa largeur d'environ 0,75 m. Chaque module 10 présente alors une longueur, dans le sens longitudinal d'environ 2,90 m. Dans le sens transversal, la largeur d'un module 10 est par exemple d'environ 2,70 m.

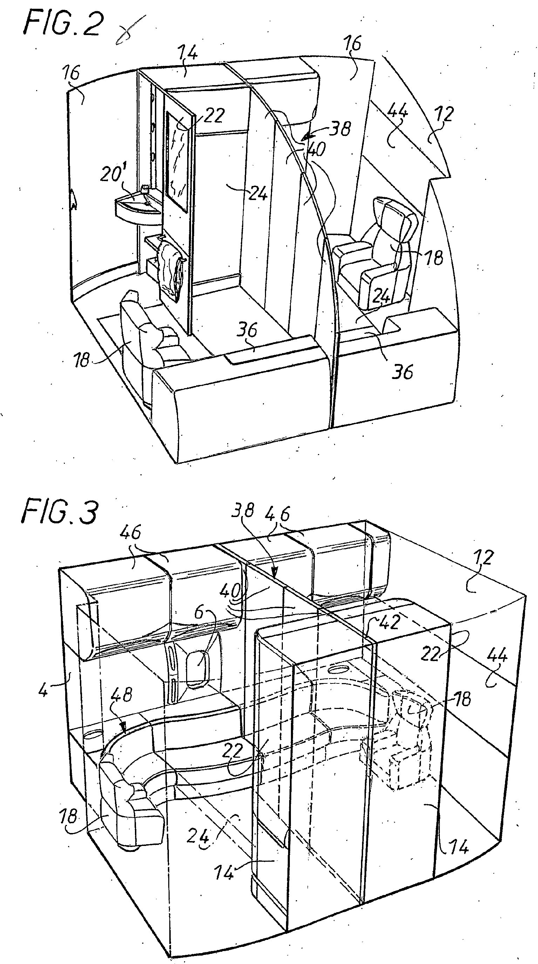

Chaque module 10 est délimité d'une part par un sol correspondant au sol de la cabine et par un plafond et d'autre part par le couloir 8, la paroi de cabine 4 et deux parois transversales 12. Dans certains cas, comme par exemple sur les figures 2 et 4, le plafond peut être constitué de la paroi de la cabine 4 car celle-ci est de forme cylindrique circulaire. Les figures du dessin représentent des modules 10 à l'intérieur d'un avion long courrier présentant deux ponts. Les figures 1, 2 et 4 représentent des modules se trouvant au pont supérieur tandis que la figure 3 représente un module se trouvant au pont inférieur. Dans les modules situés au pont supérieur, le plafond épouse la forme du tronçon de cabine qui est arrondie, le tronçon de cabine étant de forme générale cylindrique circulaire.

Chaque module 10 est équipé d'un cabinet de toilette 14, de sièges et de deux lits. L'accès au module 10 se fait à partir du couloir 8 par deux portes 16 disposées de part et d'autre du cabinet de toilette 14, à chaque fois entre celui-ci et une paroi transversale 12. Chaque module 10 est sensiblement symétrique par rapport à un plan médian transversal parallèle aux parois transversales 12 et placé à égale distance de celles-ci. Ainsi un module est formé de deux demi-modules destinés chacun à un passager et définissant un espace de vie pour celui-ci. Chaque demi-module est équipé d'un siège pivotant 18, d'un second siège et d'un lit.

Chaque cabinet de toilette 14 est de forme globale parallélépipédique. Il présente deux grandes parois longitudinales et deux petites parois transversales. Il est équipé d'un lavabo 20. L'accès au cabinet de toilette 14 se fait par deux portes 22 réalisées dans les petites parois transversales du cabinet de toilette. Ainsi il est possible d'accéder au cabinet de toilette 14 d'un module depuis chacun de ses demi-modules.

Chaque lit représenté sur la figure 1 est réalisé en deux parties, comme on peut le voir sur la figure 4. Une première partie 24 est montée pivotante autour d'un axe horizontal 26 et une seconde partie fixe 28 est disposée le long de la paroi de cabine 4. La première partie 24 pivote entre une position verticale relevée le long de la paroi longitudinale du cabinet de toilette 14 située à l'intérieur du module 10 et une position horizontale rabattue dans laquelle elle s'étend depuis le cabinet de toilette 14 vers la paroi de la cabine 4 jusqu'à la partie fixe 28.

La partie fixe 28 du lit peut être aussi utilisée, lorsque la première partie 24 pivotante est dans sa position relevée, comme siège pour un visiteur. Si l'arrondi de la paroi de cabine 4 ne permet pas d'utiliser cette partie fixe 28 du lit comme siège, il est possible de placer un autre siège 30 devant la partie fixe 28 du lit. Ce siège 30 présente alors par exemple un dossier rabattable de manière à ne pas empêcher le basculement de la première partie 24 pivotante du lit jusque dans sa position horizontale.

Dans chaque module 10 représenté sur la figure 1, il y a deux sièges pivotants 18, un dans chaque espace de vie. Ces sièges peuvent pivoter de 90° (au moins) de manière à pouvoir être orientés longitudinalement, notamment pour les phases de décollage et d'atterrissage de l'avion, et être orientés transversalement selon le souhait du passager durant le vol. Certains sièges 18 de la figure 1 sont représentés dans une orientation longitudinale tandis que d'autres sont représentés dans une orientation transversale.

On remarque aussi dans les modules 10 de la figure 1 la présence de strapontins 32. Ceux-ci sont disposés de préférence le long d'une paroi transversale 12. Ainsi ils sont accessibles même lorsque le lit est à l'horizontale. Dans certains modules 10, une table 34 est également représentée. Cette table 34 peut servir de pied pour la partie pivotante 24 du lit lorsque celle-ci est dans sa position rabattue. Il suffit alors de choisir judicieusement la hauteur de la table pour que celle-ci vienne supporter la partie mobile 24 du lit en position horizontale.

La figure 2 montre en perspective, avec plus de détails un aménagement intérieur d'un module 10. Il s'agit d'un module différent de ceux représentés sur la figure 1. Les mêmes références sont toutefois utilisées pour désigner des éléments similaires.

On retrouve ainsi dans ce module 10 un cabinet de toilette 14 disposé le long d'une paroi longitudinale entre deux portes 16, un siège pivotant 18 et un lit en deux parties. Le module est délimité aussi par deux parois transversales 12 et la paroi de cabine 4. Toutefois, une paroi transversale 12 et la paroi de cabine 4 n'ont pas été représentées sur cette figure 2 pour permettre de mieux visualiser l'intérieur du module 10.

Le lit est d'une configuration légèrement différente de celle décrite en référence à la figure 1. On retrouve ici une partie pivotante 24 se relevant en position verticale contre le cabinet de toilette 14 venant coopérer avec une autre partie 36 pour former le lit. Dans ce cas de figure, l'autre partie 36 du lit est également pivotante. Elle pivote autour d'un axe horizontal parallèle à l'axe 26 de pivotement de la partie pivotante 24 qui est sensiblement plus longue que la partie 36 complémentaire. Cette partie 36 du lit peut servir de strapontin lorsque la partie pivotante 24 du lit est relevée contre le cabinet de toilette 14. Elle constitue ainsi un second siège disponible à l'intérieur de chaque espace de vie à l'intérieur du module 10.

On remarque notamment sur les figures 2 et 3 la présence d'une cloison 38 mobile, parallèle aux parois transversales 12 et séparant les deux espaces de vie du module 10. Il s'agit d'une cloison télescopique réalisée en plusieurs segments 40. En position repliée, les segments 40 viennent se superposer les uns aux autres et sont logés dans le cabinet de toilette 14. Un logement 42 est prévu à cet effet dans celui-ci.

Dans les deux exemples de réalisation d'une cloison mobile 38 représentés au dessin, les segments 40 se replient en venant coulisser sur le sol pour venir se ranger dans leur logement 42. On peut aussi envisager d'avoir une cloison mobile suspendue qui coulisse le long d'un rail réalisé au plafond. Dans la configuration de la figure 2, dans laquelle le plafond n'est pas horizontal, la cloison 38 pourrait alors présenter des éléments en forme de portions de disque. Pour venir dans le logement 42, ces portions de disque viendraient pivoter autour d'un axe horizontal proche du sol et du logement 42.

Le logement 42 est réalisé dans une paroi transversale qui sépare le cabinet de toilette 14 en deux. Ce cabinet est alors équipé ici de deux lavabos 20' rabattables. Lorsque la porte d'accès 22 d'un espace de vie du module 10 vers le cabinet de toilette 14 est fermée, le lavabo 20' est relevé à la verticale dans le cabinet de toilette 14 et lorsque la porte 22 s'ouvre, le lavabo 20' peut se rabattre et vient en position horizontale, en saillie hors du cabinet de toilette 14. Le passager utilisant le lavabo 20' a ainsi plus de place car il n'est pas obligé de rentrer à l'intérieur du cabinet de toilette 14.

Les parois transversales 12 sont ici toutes équipées d'une portion transparente 44 permettant ainsi à un membre de l'équipage de l'avion de surveiller le(s) passager(s) se trouvant dans le module 10, notamment au cours des phases de décollage et d'atterrissage de l'avion. Cette portion transparente 44 se présente sous la forme d'une bande horizontale centrée à environ 2/3 de la hauteur de la paroi transversale 12. Lorsque plusieurs modules 10 sont alignés comme on peut le voir sur la figure 1, on prévoit d'aligner les portions transparentes 44 de telle sorte qu'un membre de l'équipage assis dans l'alignement des modules puisse voir à l'intérieur de chacun de ceux-ci et ainsi veiller à la sécurité des passagers se trouvant dans les modules (cf. figure 1), notamment durant les phases de décollage et d'atterrissage de l'avion. Durant ces phases, les passagers sont installés sur un siège orienté longitudinalement (et équipé d'une ceinture de sécurité). Les portions transparentes 44 sont alors placées sur les parois transversales 12 de manière à voir, au moins en partie, ces sièges. On a donc un alignement entre les portions transparentes 44 et les sièges destinés à recevoir les passagers durant les phases de décollage et d'atterrissage.

Comme représenté notamment sur la figure 1, on peut prévoir dans les parois transversales 12 se trouvant à proximité d'une issue de secours 2, un décrochement pour recevoir un siège pour un steward ou une hôtesse lors des phases de décollage et d'atterrissage ou bien encore au cours de l'évacuation de l'aéronef.

Pour une paroi transversale 12 se trouvant à l'extrémité d'un alignement de modules 10 il peut être inutile de prévoir une portion transparente 44 ou bien encore dans le cas d'un module isolé, seule une portion transparente 44 peut être envisagée. Toutefois, dans la pratique, il est préférable d'avoir une portion transparente sur toutes les parois transversales 12.

Durant le vol, ces portions transparentes sont avantageusement opacifiables ou occultables. Différents moyens peuvent être mis en oeuvre dans ce but. On peut par exemple prévoir des stores, persiennes, rideaux, volets ou similaires. Chaque passager dans son module peut alors choisir d'occulter ou non la paroi transparente 44 de son espace de vie. Dans une forme de réalisation préférée, les portions transparentes 44 comportent une couche de cristaux liquides et des moyens permettant de soumettre cette couche à une différence de potentiel électrique. Ces cristaux liquides présentent la propriété de devenir opaques lorsqu'ils sont orientés d'une certaine manière, cette orientation étant obtenue par excitation électrique. Durant les phases de décollage et d'atterrissage les portions transparentes 44 sont telles que le personnel de bord puisse voir les passagers à l'intérieur des modules tandis que durant le reste du vol ces portions transparentes sont opacifiées.

La figure 3 montre une autre possibilité d'aménagement d'un module 10. Dans ce cas de figure, comme indiqué plus haut, le module 10 est situé au pont inférieur de l'avion. La paroi de cabine 4 est alors approximativement verticale. On peut alors prévoir des coffres à bagages 46 en partie haute de la paroi de cabine 4. Il est également possible de prévoir des rangements dans le cabinet de toilette 14 ou bien le long de la paroi de cabine en position basse.

Le siège 18 destiné à recevoir le passager durant les phases de décollage et d'atterrissage n'est ici pas pivotant mais reste fixe. Il est complété par un siège d'angle 48 et par la partie du lit disposée du côté de la paroi de cabine 4 pour former une banquette d'angle.

Dans toutes ces variantes de réalisation décrites ci-dessus, les divers éléments constitutifs de chaque module 10 (les parois transversales 12, les sièges, le cabinet de toilette 14, etc...) sont fixés au sol sur des rails de fixation. On utilise ici les rails de fixation qui sont prévus dans tout avion destiné au transport de passagers pour la fixation de sièges. Une série de rails longitudinaux sont prévus sur toute la largeur de la cabine. Des points d'ancrage régulièrement espacés (habituellement tous les pouces, soit avec un pas de 2,54 cm) le long de chaque rail sont prévus pour la fixation de sièges. Les moyens de fixation des divers éléments constitutifs du modules sont identiques à ceux utilisés classiquement pour la fixation de sièges sur les rails.

La présente invention ne se limite pas aux formes de réalisation décrites ci-dessus à titre d'exemples non limitatifs. Elle concerne aussi toutes les variantes de réalisation à la portée de l'homme du métier dans le cadre des revendications ci-après.

Ainsi par exemple de nombreuses variantes d'équipement peuvent être prévues dans les modules.

Le siège destiné à recevoir le passager durant les phases de décollage et d'atterrissage et disposé longitudinalement durant ces phases peut par exemple être un siège convertible en lit. Dans ce cas de figure, il n'est alors pas nécessaire de prévoir une surface de couchage distincte. Ce siège peut aussi se déplacer dans le module. On a vu plus haut que ce siège pouvait pivoter mais on peut aussi prévoir qu'il puisse se translater.

La description faite ci-dessus est faite en référence à un avion comportant deux ponts, ce qui implique pour chaque pont une hauteur sous plafond pour chaque pont est limitée. De ce fait, les formes de réalisation décrites prévoient un lit en deux parties. Avec une hauteur sous plafond plus importante, il serait toutefois aussi envisageable d'avoir un lit en une seule partie.

L'aménagement du cabinet de toilette peut être différent de ce qui est décrit ci-dessus. On peut envisager d'équiper cet espace sanitaire d'une douche ou bien encore d'un WC.

Il est possible de prévoir un équipement différent à la place du cabinet de toilette. Cet espace peut par exemple être utilisé comme espace de rangement, pour les effets personnels des passagers voyageant dans le module de cabine correspondant, ou bien de rangement pour le personnel navigant commercial. Dans ce dernier cas, ou peut envisager de ranger des trolleys (ou chariots) dans ces espaces. Ceci permet alors de libérer de la place à l'endroit prévu habituellement pour le rangement de ces trolleys et d'y aménager des places assises pour d'autres voyageurs. Cet espace peut également être aménagé en meuble office (désigné généralement par le terme anglais "galley"). On peut alors envisager de préparer à la demande du passager voyageant dans le module de cabine un plat particulier. Celui ci peut alors être préparé sur place et servi immédiatement.

Le module de cabine peut également être utilisé pour le rapatriement d'un malade ou d'un blessé. Dans ce cas, le cabinet de toilette décrit plus haut est avantageusement remplacé par un local contenant des appareils médicaux.

Le cabinet de toilette, ou un quelconque module de service, ne se trouve pas forcément disposé le long du couloir, ni centré par rapport aux deux parois transversales du module. Ce module de service, un cabinet de toilette par exemple, pourrait également se retrouver le long de la paroi de cabine. Dans ce cas, ce module de service est plutôt prévu à l'usage des passagers voyageant dans le module de cabine.

Il est également envisageable de prévoir deux modules de service, un dans chaque espace de vie du module de cabine. Ces modules de service sont alors de préférence disposés symétriquement par rapport à un plan transversal médian du module de cabine. Ces modules de service peuvent alors se trouver par exemple disposés chacun dans un angle du module de cabine.

Les cloisons mobiles décrites ne comportent pas de portion transparente. En effet, il est prévu de les escamoter dans leur logement durant les phases de décollage et d'atterrissage. Toutefois, si une telle cloison mobile doit pouvoir rester fermée durant ces phases de décollage et d'atterrissage, une portion transparente, alignée avec les portions transparentes des parois transversales, sera de préférence prévue.

## Revendications

1. Module de cabine d'aéronef comportant :
- deux parois transversales (12) s'étendant depuis une paroi de cabine (4) longitudinale jusqu'à un couloir (8) longitudinal,
- une paroi longitudinale séparant le module de cabine du couloir (8),
- au moins un module de service (14) disposé entre les deux parois transversales (12), sensiblement symétriquement par rapport à un plan transversal médian, en définissant avec les parois du module deux espaces de vie contigus,
- un accès (16) du couloir à chaque espace de vie,
- au moins un siège (18) dans chaque espace de vie, chaque siège ayant au moins une configuration dans laquelle il est orienté parallèlement à la paroi de cabine (4),
chaque espace de vie comportant des éléments (24, 28) pouvant former une surface de couchage pour au moins un passager,
**caractérisé en ce que** l'une au moins des parois transversales (12) comporte une portion transparente (44).

2. Module selon la revendication 1, **caractérisé en ce que** le module de service (14) est disposé le long du couloir (8) en étant séparé de chaque paroi transversale (12) par un accès (16) du couloir au module.

3. Module selon l'une des revendications 1 à 2, **caractérisé en ce qu'**un siège (18) de chaque espace de vie est d'un type transformable et forme lesdits éléments pouvant former la surface de couchage.

4. Module selon la revendication 3, **caractérisé en ce que** le siège (18) est monté pivotant autour d'un axe vertical de telle manière que la surface de couchage puisse être orientée transversalement.

5. Module selon l'une des revendications 1 à 4, **caractérisé en ce que** les éléments pouvant former une surface de couchage comportent un panneau (24) monté pivotant entre une position sensiblement verticale relevée contre le module de service (14) et une position rabattue sensiblement horizontale.

6. Module selon la revendication 5, **caractérisé en ce que** les éléments pouvant former une surface de couchage comportent en outre une surface d'appui (28) sensiblement horizontale disposée le long de la paroi de cabine et coopérant avec le panneau pivotant (24) lorsque celui-ci est en position rabattue pour former la surface de couchage.

7. Module selon la revendication 6, **caractérisé en ce que** la surface d'appui (28) forme un siège muni éventuellement d'un dossier.

8. Module selon l'une des revendications 1 à 7, **caractérisé en ce qu'**un second siège (30, 32) est prévu dans chaque espace de vie.

9. Module selon la revendication 8, **caractérisé en ce que** le second siège est un strapontin (32).

10. Module selon la revendication 8, **caractérisé en ce que** le second siège (30, 32) est orienté perpendiculairement à la paroi de cabine (4) contre celle-ci.

11. Module selon la revendication 10, **caractérisé en ce qu'**un siège d'angle (48) relie les deux sièges (18, 30) formant ainsi une banquette d'angle.

12. Module selon l'une des revendications 1 à 11, **caractérisé en ce qu'**une cloison mobile (38) ou amovible est disponible pour séparer à volonté les deux espaces de vie en s'étendant entre la paroi de cabine (4) et la paroi longitudinale opposée.

13. Module selon la revendication 12, **caractérisé en ce que** la cloison (38) est formée de plusieurs tronçons (40) télescopiques extensibles transversalement.

14. Module selon la revendication 13, **caractérisé en ce que** le module de service (14) est centré par rapport aux parois transversales (12) et est disposé le long d'une paroi longitudinale, et **en ce que** les tronçons (40) télescopiques se replient vers le module de service (14).

15. Module selon la revendication 14, **caractérisé en ce que** les tronçons (40) télescopiques se logent en position repliée dans le module de service (14).

16. Module selon la revendication 15, **caractérisé en ce que** le module de service (14) comporte une paroi de séparation transversale présentant un logement (42) pour recevoir les tronçons (40) télescopiques de la cloison mobile (38).

17. Module selon l'une des revendications 12 à 16, **caractérisé en ce que** la cloison mobile (38) comporte une portion transparente.

18. Module selon l'une des revendications 1 à 17, **caractérisé en ce que** les portions transparentes (44) réalisées dans les parois transversales (12) sont occultables.

19. Module selon la revendication 18, **caractérisé en ce qu'**au moins une portion transparente (44) comporte une couche de cristaux liquides associée à des moyens pour soumettre cette couche de cristaux liquides à une différence de potentiel électrique, cette couche étant opaque ou translucide selon que la différence de potentiel appliquée.

20. Module selon l'une des revendications 18 ou 19, **caractérisé en ce qu'**au moins une portion transparente (44) est équipée d'un store ou similaire.

21. Module selon l'une des revendications 1 à 20, **caractérisé en ce que** le module de service est un équipement sanitaire (14) présentant au moins un point d'eau.

22. Module selon la revendication 21, **caractérisé en ce que** l'équipement sanitaire (14) est muni d'un lavabo (20) central.

23. Module selon l'une des revendications 21 ou 22, **caractérisé en ce que** l'équipement sanitaire (14) est muni de deux portes d'accès (22), chaque espace de vie comportant une porte d'accès à l'équipement sanitaire.

24. Module selon la revendication 23, **caractérisé en ce que** l'équipement sanitaire (14) comprend un lavabo (20') pour chaque espace de vie.

25. Module selon la revendication 24, **caractérisé en ce que** chaque lavabo (20') est mobile entre une position escamotée à l'intérieur de l'équipement sanitaire (14) et une position sortie à l'extérieur de l'équipement sanitaire (14).

26. Module selon la revendication 25, **caractérisé en ce que** l'ouverture de la porte (22) d'accès à l'équipement sanitaire (14) commande le passage du lavabo (20') de sa position escamotée vers sa position sortie.

27. Module selon l'une des revendications 21 à 26, **caractérisé en ce que** l'équipement sanitaire (14) est équipé d'une douche.

28. Module selon l'une des revendications 1 à 20, **caractérisé en ce que** le module de service (14) est un espace de rangement.

29. Module selon l'une des revendications 1 à 20, **caractérisé en ce que** le module de service (14) est un module d'assistance médicale.

30. Module selon l'une des revendications 1 à 20, **caractérisé en ce que** le module de service (14) est un meuble office équipé pour la restauration de passagers.

31. Module selon l'une des revendications 1 à 30, **caractérisé en ce que** les parois transversales (12), le module de service (14) et le siège (18) au nombre d'au moins un sont munis chacun de moyens de fixation pour leur fixation sur des rails de fixation longitudinaux disposés dans le sol de la cabine.

32. Module selon l'une des revendications 1 à 31, **caractérisé en ce qu'**il présente une longueur dans la direction longitudinale comprise entre 2,0 m et 4,0 m et une largeur au sol, dans la direction transversale, comprise entre 2,3 m et 3,5 m.

33. Ensemble de modules (10) selon l'une des revendications 1 à 32 alignés les uns à côté des autres le long d'un couloir (8) longitudinal, **caractérisé en ce que** chaque paroi transversale (12) de module, sauf éventuellement une paroi transversale se trouvant à une extrémité de l'ensemble de modules, comporte une portion transparente (44) et **en ce que** les portions transparentes sont alignées.

34. Ensemble selon la revendication 33, **caractérisé en ce que** ledit siège (18) de chaque module de l'ensemble ayant une configuration dans laquelle il est orienté parallèlement au couloir se trouve sensiblement dans l'alignement des portions transparentes (44).

35. Tronçon de cabine d'aéronef, **caractérisé en ce qu'**il comporte au moins un module (10) selon l'une des revendications 1 à 34.

36. Tronçon de cabine d'aéronef selon la revendication 35, **caractérisé en ce qu'**il comporte un couloir central (8) de part et d'autre duquel se trouve au moins un module (10).

37. Aéronef, **caractérisé en ce qu'**il comporte au moins un module (10) selon l'une des revendications 1 à 32.

## Patentansprüche

1. Luftfahrzeug-Kabinenmodul, das aufweist:
- zwei Querwände (12), die sich von einer Kabinenlängswand (4) bis zu einem Längsgang (8) erstrecken,
- eine Längswand, die das Kabinenmodul vom Gang (8) trennt,
- mindestens ein Servicemodul (14), das zwischen den zwei Querwänden (12) im Wesentlichen symmetrisch bezüglich einer Quermittelebene angeordnet ist, indem es mit den Wänden des Moduls zwei aneinandergrenzende Aufenthaltsräume definiert,
- einen Zugang (16) vom Gang zu jedem Aufenthaltsraum,
- mindestens einen Sitz (18) in jedem Aufenthaltsraum, wobei jeder Sitz mindestens eine Konfiguration hat, in der er parallel zur Kabinenwand (4) ausgerichtet ist,
wobei jeder Aufenthaltsraum Elemente (24, 28) aufweist, die eine Liegefläche für mindestens einen Passagier bilden können,
**dadurch gekennzeichnet, dass** mindestens eine der Querwände (12) einen transparenten Teil (44) aufweist.

2. Modul nach Anspruch 1, **dadurch**
**gekennzeichnet, dass** das Servicemodul (14) entlang des Gangs (8) angerordnet ist, indem es von jeder Querwand (12) durch einen Zugang (16) vom Gang zum Modul getrennt ist.

3. Modul nach einem der Ansprüche 1 bis 2,
**dadurch gekennzeichnet, dass** ein Sitz (18) jedes Aufenthaltsraums von einem umwandelbaren Typ ist und die Elemente bildet, die die Liegefläche bilden können.

4. Modul nach Anspruch 3, **dadurch**
**gekennzeichnet, dass** der Sitz (18) derart um eine senkrechte Achse schwenkbar montiert ist, dass die Liegefläche quer ausgerichtet sein kann.

5. Modul nach einem der Ansprüche 1 bis 4, **dadurch gekennzeichnet, dass** die Elemente, die eine Liegefläche bilden können, eine Platte (24) aufweisen, die zwischen einer gegen das Servicemodul (14) angehobenen, im Wesentlichen senkrechten Stellung und einer heruntergeklappten, im Wesentlichen waagrechten Stellung schwenkend montiert ist.

6. Modul nach Anspruch 5, **dadurch**
**gekennzeichnet, dass** die Elemente, die eine Liegefläche bilden können, außerdem eine im Wesentlichen waagrechte Auflagefläche (28) aufweisen, die entlang der Kabinenwand angeordnet ist und mit der schwenkbaren Platte (24) zusammenwirkt, wenn diese in der heruntergeklappten Stellung ist, um die Liegefläche zu bilden.

7. Modul nach Anspruch 6, **dadurch**
**gekennzeichnet, dass** die Auflagefläche (28) einen ggf. mit einer Rückenlehne versehenen Sitz bildet.

8. Modul nach einem der Ansprüche 1 bis 7, **dadurch gekennzeichnet, dass** ein zweiter Sitz (30, 32) in jedem Aufenthaltsraum vorgesehen ist.

9. Modul nach Anspruch 8, **dadurch gekennzeichnet, dass** der zweite Sitz ein Klappsitz (32) ist.

10. Modul nach Anspruch 8, **dadurch**
**gekennzeichnet, dass** der zweite Sitz (30, 32) lotrecht zur Kabinenwand (4) gegen diese ausgerichtet ist.

11. Modul nach Anspruch 10, **dadurch**
**gekennzeichnet, dass** ein Ecksitz (48) die zwei Sitze (18, 30) verbindet, wodurch eine Eckbank gebildet wird.

12. Modul nach einem der Ansprüche 1 bis 11, **dadurch gekennzeichnet, dass** eine bewegliche oder entfernbare Zwischenwand (38) zur Verfügung steht, um die zwei Aufenthaltsräume nach Wunsch zu trennen, indem sie sich zwischen der Kabinenwand (4) und der gegenüberliegenden Längswand erstreckt.

13. Modul nach Anspruch 12, **dadurch**
**gekennzeichnet, dass** die Zwischenwand (38) von mehreren quer ausziehbaren teleskopischen Abschnitten (40) gebildet wird.

14. Modul nach Anspruch 13, **dadurch**
**gekennzeichnet, dass** das Servicemodul (14) bezüglich der Querwände (12) zentriert und entlang einer Längswand angeordnet ist, und dass die teleskopischen Abschnitte (40) sich zum Servicemodul (14) zusammenklappen.

15. Modul nach Anspruch 14, **dadurch**
**gekennzeichnet, dass** die teleskopischen Abschnitte (40) in der zusammengeklappten Stellung im Servicemodul (14) untergebracht sind.

16. Modul nach Anspruch 15, **dadurch**
**gekennzeichnet, dass** das Servicemodul (14) eine Quertrennwand aufweist, die eine Aufnahme (42) hat, um die teleskopischen Abschnitte (40) der beweglichen Zwischenwand (38) aufzunehmen.

17. Modul nach einem der Ansprüche 12 bis 16, **dadurch gekennzeichnet, dass** die bewegliche Zwischenwand (38) einen transparenten Teil aufweist.

18. Modul nach einem der Ansprüche 1 bis 17,
**dadurch gekennzeichnet, dass** die in den Querwänden (12) hergestellten transparenten Teile (44) verdeckbar sind.

19. Modul nach Anspruch 18, **dadurch**
**gekennzeichnet, dass** mindestens ein transparenter Teil (44) eine Flüssigkristallschicht aufweist, die Einrichtungen zugeordnet ist, um diese Flüssigkristallschicht einer elektrischen Potentialdifferenz auszusetzen, wobei diese Schicht je nach der angewendeten Potentialdifferenz undurchsichtig oder durchscheinend ist.

20. Modul nach einem der Ansprüche 18 oder 19, **dadurch gekennzeichnet, dass** mindestens ein transparenter Teil (44) mit einem Rollo oder Ähnlichem ausgestattet ist.

21. Modul nach einem der Ansprüche 1 bis 20, **dadurch gekennzeichnet, dass** das Servicemodul eine Sanitäreinrichtung (14) ist, die mindestens eine Wasserstelle aufweist.

22. Modul nach Anspruch 21, **dadurch**
**gekennzeichnet, dass** die Sanitäreinrichtung (14) mit einem zentralen Waschbecken (20) ausgestattet ist.

23. Modul nach einem der Ansprüche 21 oder 22, **dadurch gekennzeichnet, dass** die Sanitäreinrichtung (14) mit zwei Zugangstüren (22) versehen ist, wobei jeder Aufenthaltsraum eine Zugangstür zur Sanitäreinrichtung aufweist.

24. Modul nach Anspruch 23, **dadurch**
**gekennzeichnet, dass** die Sanitäreinrichtung (14) ein Waschbecken (20') für jeden Aufenthaltsraum enthält.

25. Modul nach Anspruch 24, **dadurch**
**gekennzeichnet, dass** jedes Waschbecken (20') zwischen einer ins Innere der Sanitäreinrichtung (14) eingezogenen Stellung und einer aus der Sanitäreinrichtung (14) ausgetretenen Stellung beweglich ist.

26. Modul nach Anspruch 25, **dadurch**
**gekennzeichnet, dass** die Öffnung der Zugangstür (22) zur Sanitäreinrichtung (14) den Übergang des Waschbeckens (20') von seiner eingezogenen Stellung in seine Austrittsstellung steuert.

27. Modul nach einem der Ansprüche 21 bis 26, **dadurch gekennzeichnet, dass** die Sanitäreinrichtung (14) mit einer Dusche ausgestattet ist.

28. Modul nach einem der Ansprüche 1 bis 20, **dadurch gekennzeichnet, dass** das Servicemodul (14) ein Stauraum ist.

29. Modul nach einem der Ansprüche 1 bis 20, **dadurch gekennzeichnet, dass** das Servicemodul (14) ein medizinisches Versorgungsmodul ist.

30. Modul nach einem der Ansprüche 1 bis 20, **dadurch gekennzeichnet, dass** das Servicemodul (14) ein Anrichtemöbel ist, das für die Verpflegung von Passagieren ausgestattet ist.

31. Modul nach einem der Ansprüche 1 bis 30, **dadurch gekennzeichnet, dass** die Querwände (12), das Servicemodul (14) und der Sitz (18), von denen mindestens je eins vorhanden ist, je mit Befestigungseinrichtungen für ihre Befestigung an Längsbefestigungsschienen versehen sind, die im Boden der Kabine angeordnet sind.

32. Modul nach einem der Ansprüche 1 bis 31, **dadurch gekennzeichnet, dass** es eine Länge in Längsrichtung zwischen 2,0 m und 4,0 m und eine Breite am Boden in Querrichtung zwischen 2,3 m und 3,5 m hat.

33. Einheit von Modulen (10) nach einem der Ansprüche 1 bis 32, die nebeneinander entlang eines Längsgangs (8) fluchtend ausgerichtet sind, **dadurch gekennzeichnet, dass** jede Querwand (12) des Moduls, abgesehen ggf. von einer Querwand, die sich an einem Ende der Einheit von Modulen befindet, einen transparenten Teil (44) aufweist, und dass die transparenten Teile fluchtend ausgerichtet sind.

34. Einheit nach Anspruch 33, **dadurch**
**gekennzeichnet, dass** der Sitz (18) jedes Moduls der Einheit, der eine Konfiguration hat, in der er parallel zum Gang ausgerichtet ist, sich im Wesentlichen in Flucht mit den transparenten Teilen (44) befindet.

35. Luftfahrzeugkabinenabschnitt, **dadurch**
**gekennzeichnet, dass** er mindestens ein Modul (10) nach einem der Ansprüche 1 bis 34 aufweist.

36. Luftfahrzeugkabinenabschnitt nach Anspruch 35, **dadurch gekennzeichnet, dass** er einen Mittelgang (8) aufweist, zu dessen beiden Seiten sich mindestens ein Modul (10) befindet.

37. Luftfahrzeug, **dadurch gekennzeichnet, dass** es ein Modul (10) nach einem der Ansprüche 1 bis 32 aufweist.

## Claims

1. Aircraft cabin module comprising:
- two transverse walls (12) extending from a longitudinal cabin wall (4) up to a longitudinal aisle (8),
- a longitudinal wall separating the cabin module from the aisle (8),
- at least one service module (14) arranged between the two transverse walls (12), more or less symmetrically in relation to a transverse median plane, defining with the walls of the module two contiguous personal spaces,
- an access (16) from the aisle to each personal space,
- at least one seat (18) in each personal space, each seat having at least one configuration in which it is positioned parallel to the cabin wall (4),
- each personal space comprising elements (24, 28) capable of forming a bedding surface for at least one passenger, **characterised in that** at least one of the transverse walls (12) comprises a transparent portion (44).

2. Module according to claim 1, **characterised in that** the service module (14) is arranged along the aisle (8), being separated from each transverse wall (12) by an access (16) from the aisle to the module.

3. Module according to one of claims 1 or 2, **characterised in that** one seat (18) of each personal space is of a convertible type and constitutes the said elements capable of forming the bedding surface.

4. Module according to claim 3, **characterised in that** the seat (18) is set up pivoting around a vertical axis in such manner that the bedding surface can be positioned crosswise.

5. Module according to one of claims 1 to 4, **characterised in that** the elements capable of forming a bedding surface comprise a panel (24) set up pivoting between a more or less vertical position turned up against the service module (14) and a more or less horizontal turned-down position.

6. Module according to claim 5, **characterised in that** the elements capable of forming a bedding surface also comprise a more or less horizontal support surface (28) arranged along the cabin wall and cooperating with the pivoting panel (24) when the latter is in turned-down position to form the bedding surface.

7. Module according to claim 6, **characterised in that** the support surface (28) forms a seat possibly equipped with a back.

8. Module according to one of claims 1 to 7, **characterised in that** a second seat (30, 32) is provided in each personal space.

9. Module according to claim 8, **characterised in that** the second seat is a foldaway seat (32).

10. Module according to claim 8, **characterised in that** the second seat (30, 32) is positioned perpendicular to the cabin wall (4) against the latter.

11. Module according to claim 10, **characterised in that** a corner seat (48) connects the two seats (18, 30) thus forming a corner banquette.

12. Module according to one of claims 1 to 11, **characterised in that** a movable or removable partition (38) is available to separate the two personal spaces at will, extending between the cabin wall (4) and the opposite longitudinal wall.

13. Module according to claim 12, **characterised in that** the partition (38) is made up of several telescopic sections (40) extensible transversely.

14. Module according to claim 13, **characterised in that** the service module (14) is centered in relation to the transverse walls (12) and is arranged along a longitudinal wall, and **in that** the telescopic sections (40) fold up toward the service module (14).

15. Module according to claim 14, **characterised in that** the telescopic sections (40) are housed in folded position in the service module (14).

16. Module according to claim 15, **characterised in that** the service module (14) comprises a transverse separation wall having a housing (42) to accommodate the telescopic sections (40) of the movable partition (38).

17. Module according to one of claims 12 to 16, **characterised in that** the movable partition (38) comprises a transparent portion.

18. Module according to one of claims 1 to 7, **characterised in that** the transparent portions (44) implemented in the transverse walls (12) can be obscured.

19. Module according to claim 18, **characterised in that** at least one transparent portion (44) comprises a liquid crystal layer combined with means for subjecting this liquid crystal layer to a difference of electric potential, this layer being opaque or translucent depending on the difference of potential applied.

20. Module according to one of claims 18 or 19, **characterised in that** at least one transparent portion (44) is equipped with a shade or similar element.

21. Module according to one of claims 1 to 20, **characterised in that** the service module is a bathroom facility (14) having at least one water source.

22. Module according to claim 21, **characterised in that** the bathroom facility (14) is equipped with a central washbasin (20).

23. Module according to one of claims 21 or 22, **characterised in that** the bathroom facility (14) is equipped with two access doors (22), each personal space comprising a door for access to the bathroom facility.

24. Module according to claim 23, **characterised in that** the bathroom facility (14) comprises a washbasin (20') for each personal space.

25. Module according to claim 24, **characterised in that** each washbasin (20') is movable between a retracted position inside the bathroom facility (14) and an extended position outside the bathroom facility (14).

26. Module according to claim 25, **characterised in that** the opening of the door (22) for access to the bathroom facility (14) controls the changeover of the washbasin (20') from its retracted position to its extended position.

27. Module according to one of claims 21 to 26, **characterised in that** the bathroom facility (14) is equipped with a shower.

28. Module according to one of claims 1 to 20, **characterised in that** the service module (14) is a storage space.

29. Module according to one of claims 1 to 20, **characterised in that** the service module (14) is a medical care module.

30. Module according to one of claims 1 to 20, **characterised in that** the service module (14) is a pantry unit equipped for the passengers' refreshment.

31. Module according to one of claims 1 to 30, **characterised in that** the transverse walls (12), the service module (14) and the seat (18) at least one in number are each equipped with fastening means for their attachment on longitudinal attachment rails arranged on the floor of the cabin.

32. Module according to one of claims 1 to 31, **characterised in that** it has a length in the longitudinal direction ranging between 2.0 m and 4.0 m and a width on the floor, in the transverse direction, ranging between 2.3 m and 3.5 m.

33. Series of modules (10) according to one of claims 1 to 32 aligned one beside the other along a longitudinal aisle (8), **characterised in that** each transverse module wall (12), possibly except for a transverse wall located at one end of the series of modules, comprises a transparent portion (44) and **in that** the transparent portions are aligned.

34. Series according to claim 33, **characterised in that** the said seat (18) of each module of the series having a configuration in which it is positioned parallel to the aisle is located more or less in alignment with the transparent portions (44).

35. Section of an aircraft cabin, **characterised in that** it comprises at least one module (10) according to one of claims 1 to 34.

36. Section of an aircraft cabin according to claim 35, **characterised in that** it comprises a central aisle (8) on either side of which is at least one module (10).

37. Aircraft, **characterised in that** it comprises at least one module (10) according to one of claims 1 to 32.
